# EUROPEAN PATENT APPLICATION

(11) **EP 4 559 325 A1**
(43) Date of publication of application: **28.05.2025**
(21) Application number: 23020517.1
(22) Date of filing: 23.11.2023
(51) Int. Cl.: A23L 33/105, A23L 33/21, A23L 33/00

(54) **NUTRITIONAL COMPOSITION COMPRISING RESVERATROL**

(71) Applicant: Rudjer Boskovic Institute, 10000 Zagreb (HR)
(72) Inventor: Lenkica, Penava, 48000 Koprivnica (HR); Ceilinger, Marijana, 48000 Koprivnica (HR); Kralj, Marijeta, 10000 Zagreb (HR); Jeric, Ivanka, 10000 Zagreb (HR); Balog, Tihomir, 10000 Zagreb (HR); Kos, Blazenka, 10000 Zagreb (HR); Butorac, Katarina, 10000 Zagreb (HR)
(74) Representative: Pejcinovic, Tomislav

(57) **Abstract**

The present invention disclose enteral composition comprising resveratrol, grape seed extract and dietary fibers selected from resistant dextrin, oligofructose, inulin, acacia fiber and citrus fiber. The composition is useful in providing nutrition to a persons suffering from disorder selected from diabetes, GI disorders, malnutrition in general or disease-related malnutrition or are in risk of malnutrition, or to a persons suffering from sarcopenia and age related nutrition consequences.

## Description

### FIELD OF THE INVENTION

The present invention relates to enteral composition comprising dietary fibers, resveratrol and grape seed extract. More particularly, it relates to enteral composition with beneficial effect to human gut microbiota.

### BACKGROUND OF THE INVENTION

The normal gut microbiota plays an important role in maintaining human health. Strains from genera like *Lactobacillus* and *Bifidobacterium* are considered probiotic strains which help in maintaining the gut homeostasis through a wide range of functions. (Kumar Singh, A.S. et al: Beneficial Effects of Dietary Polyphenols on Gut Microbiota and Strategies to Improve Delivery Efficiency. Nutrients 2019, 11, 2216.). As gut microbiota have been involved in the pathogenesis of several gastrointestinal (GI) disorders (Lo Presti, A., et al: Fecal and Mucosal Microbiota Profiling in Irritable Bowel Syndrome and Inflammatory Bowel Disease. Front. Microbiol. 2019, 10, 1655), there is an increasing interest in dietary strategies to modulate gut microbiota.

It is therefore necessary to provide an enteral composition with an improved effect on the microbiota. The present invention provides one aspect of the solution for mentioned needs.

The term "dietary fiber" was coined in 1953, but years before that, some properties, such as a laxative efect, increased stool weight and disease prevention were attributed to dietary fiber. Nowadays, the link between dietary fibers and the prevention of cardiovascular and metabolic diseases, such as diabetes, obesity and cancer is well known (Slavin, J., Fiber and prebiotics: Mechanisms and health benefits. Nutrients 2013, 5, 1417-1435)

Resveratrol is a natural, biologically active compound present in different plant species and having beneficial effects in both animals and humans (Szkudelski, T., Szkudelska, K.: Resveratrol and diabetes: from animal to human studies. Biochim. Biophys. Acta 2015, 1852, 1145-1154). Preliminary clinical trials show that resveratrol is effective in type 2 diabetic patients. The effects induced by resveratrol are strongly related to the capability of this compound to increase activity of AMPK and SIRT1 in various tissues of diabetic patients. It has been shown that antioxidant and anti-inflammatory effects of resveratrol are also involved in its action in diabetic animals (Szkudelski, T., Szkudelska, K.: Resveratrol and diabetes: from animal to human studies. Biochim. Biophys. Acta, 2015, 1852, 1145-1154).

Resveratrol is an antioxidant polyphenol that is present in red wines, grapes, and roots of Polygonum cuspidatum that has attracted a lot of attention in recent years. (Ikizler M et al.: Protective effects of resveratrol in ischemia reperfusion injury of skeletal muscle: A clinically relevant animal model for lower extremity ischemia. Chin J Physiol 2006, 49, 204-9, 22 and Murase T, et al.: T. Suppression of the aging-associated decline in physical performance by a combination of resveratrol intake and habitual exercise in senescence-accelerated mice. Biogerontology 2009, 10, 423-34).

In the past few years, data has emerged suggesting that the therapeutic potential of resveratrol may be due to its interaction with the gut microbiota, reporting changes in bacterial composition associated with beneficial metabolic outcomes (Chaplin, A., Carpéné, C., & Mercader, J. Resveratrol, metabolic syndrome, and gut microbiota. Nutrients, 2018, 10(11), 1651).

Grape seed extact has been reported to possess a large spectrum of pharmacological and therapeutic effects such as antioxidative, anti-inflammatory, antimicrobal activities, as well as having cardioprotective, hepatoprotective and neuroprotective effects, effect on the metabolic syndrome and diabetes. (Mohammad A., et al.: Effect of 8 weeks' supplementation grape seed extract on insulin resistance in iranian adolescents with metabolic syndrome: A randomized controlled trial. Diabetes Metab. Syndr. Clin. Res. Rev. 2021, 15, 197-203; Zhang H, et al.: The impact of grape seed extract treatment on blood pressure changes. A meta-analysis of 16 randomized controlled trials. Medicine, 2016, 95, 33-39 and Unusan N., Proanthocyanidins in grape seeds: An updated review of their health benefits and potential uses in the food industry J. Funct. Food 2020, 27, 103861).

Enteral composition or enteral nutritional composition or nutritional composition relates to the formulations or formulas from category of food for special medical purposes (FSMP) or commonly referred to as enteral nutrition or clinical nutrition.

The present invention reveals composition comprising specific dietary fibers, resveratrol and grape seed extract having beneficial effect to gut microbiota and as such may be used for enteral composition for: persons with diabetes, GI disorders, for persons who suffer from malnutrition in generally or disease-related malnutrition or are in of risk of malnutrition, for persons who suffer from sarcopenia and age related nutrition consequences.

### SUMMARY OF THE INVENTION

The present invention relates to an enteral nutritional composition comprising:
a) a fiber fraction wheerein fibers are selected from resistant dextrin, oligofructose, inulin, acacia fiber and citrus fiber
b) antioxidant selected from resveratrol and grape seed extract.

In one embodiment, the nutritional composition further comprises a protein fraction, a fat fraction, and a carbohydrate fraction.

The invention further relates to the use of the composition in preparing nutraceuticals with a beneficial effect to microbiota.

### BRIEF DESCRIPTION OF THE FIGURES

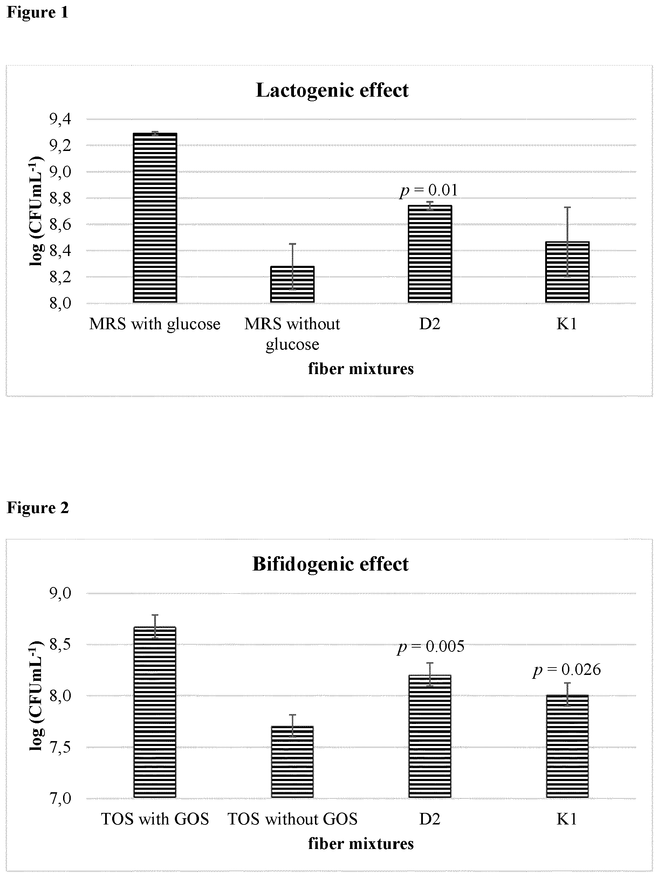

The results in Figures 1 to 7 display the mean value of three independent samples ± standard deviation (SD) with marked statistically significant differences (*p* < 0.05) of increased bacteria.
**Figure 1****:** Influence of added fiber mixtures on bacteria growth from feces samples (log (CFUmL⁻¹)) on MRS agar without glucose, to determine lactogenic effect.
   The results show increased bacteria on MRS agar with the addition of fiber mixtures K1 and D2 compared to MRS agar without the addition of glucose and fiber mixture. MRS with glucose is a positive control.
**Figure 2****:** Influence of added fiber mixtures on bacteria growth from feces samples (log (CFUmL⁻¹)) on galactooligosaccharide-free (GOS-free) TOS agar, to determine bifidogenic effect. The results show increased bacteria on TOS agar with the addition of fiber mixtures K1 and D2 in relation to TOS agar without the addition of GOS and fiber mixture. TOS agar with GOS is positive control.

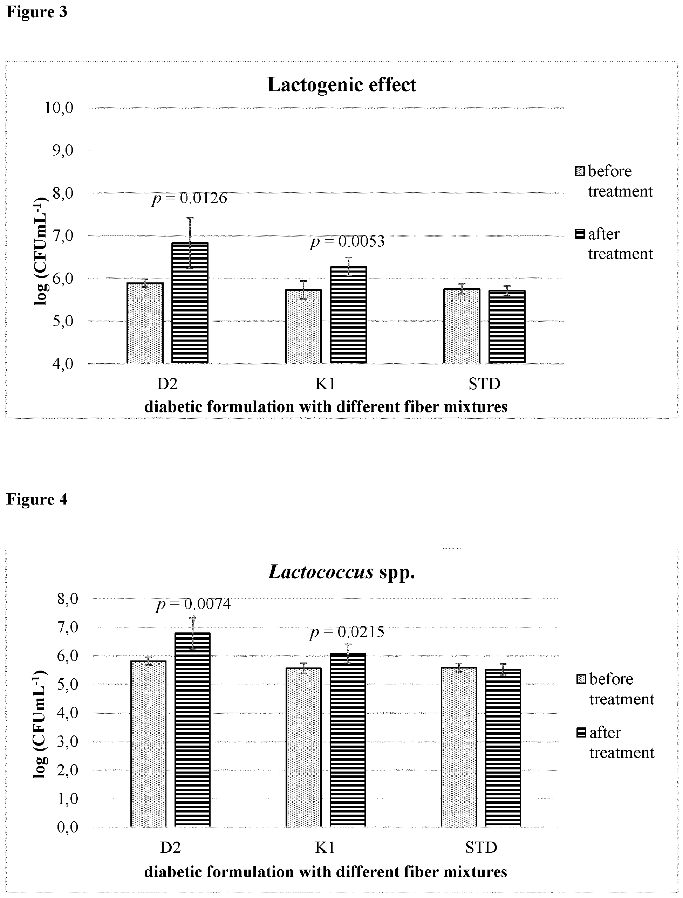

**Figure 3****:** Determination of lactogenic effect *in vivo* in mice fed with diabetic formulation containing different fiber mixtures by determining the number of colonies (log (CFUmL⁻¹)) on MRS agar. The results show increased bacteria on MRS agar before and after feeding with diabetic formulation containing different fiber mixtures K1 and D2. Standard food - fed mice (STD) are a control sample.
**Figure 4****:** Determination of *in vivo* effect on the number of bacteria of the genus *Lactococcus,* in mice fed with diabetic formulation containing different fiber mixtures, by determining the number of increased colonies (log (CFUmL⁻¹)) on M17 agar. The results show increased bacteria on M17 agar before and after feeding with diabetic formulation containing different fiber mixtures K1 and D2. Standard food - fed mice (STD) are a control sample

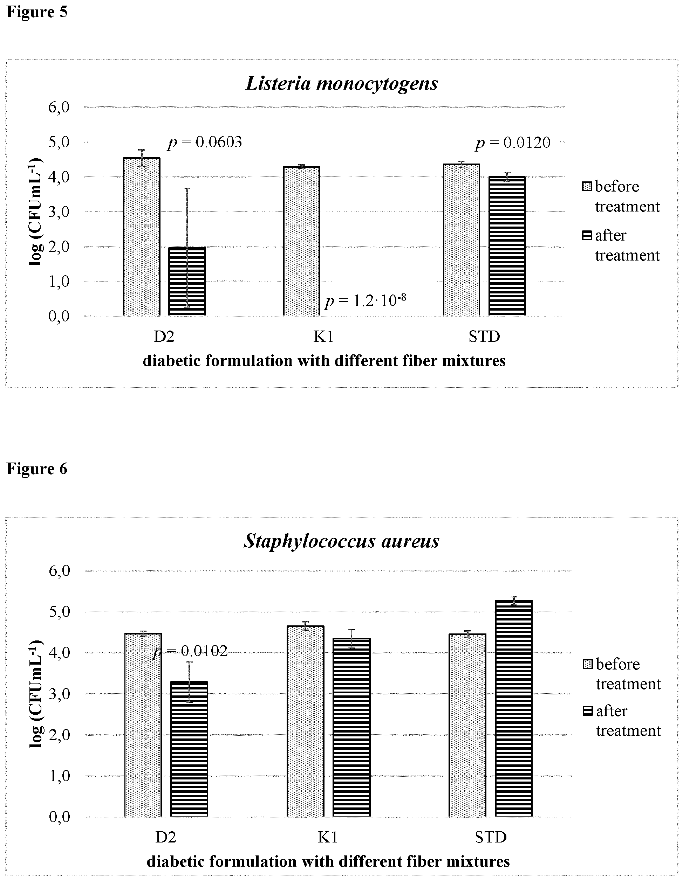

**Figure 5****:** Determination of *in vivo* effect on the number of bacteria of the species *L. monocytogenes,* in mice fed with diabetic formulation containing different fiber mixtures, by determining the number of increased colonies (log (CFU mL⁻¹)) on Aloe agar. The results show increased bacteria on the Aloe agar before and after feeding with diabetic formulation containing different fiber mixtures K1 and D2. Standard food - fed mice (STD) are a control sample.
**Figure 6****:** Determination of the *in vivo* effect on the number of bacteria of the species S. aureus, in mice fed with diabetic formulation containing different fiber mixtures, by determining the number of increased colonies (log (CFU mL⁻¹)) on the Baird-Parker agar. The results show increased bacteria on the Baird-Parker agar before and after feeding with diabetic formulation containing different fiber mixtures K1 and D2. Standard food - fed mice (STD) are a control sample.

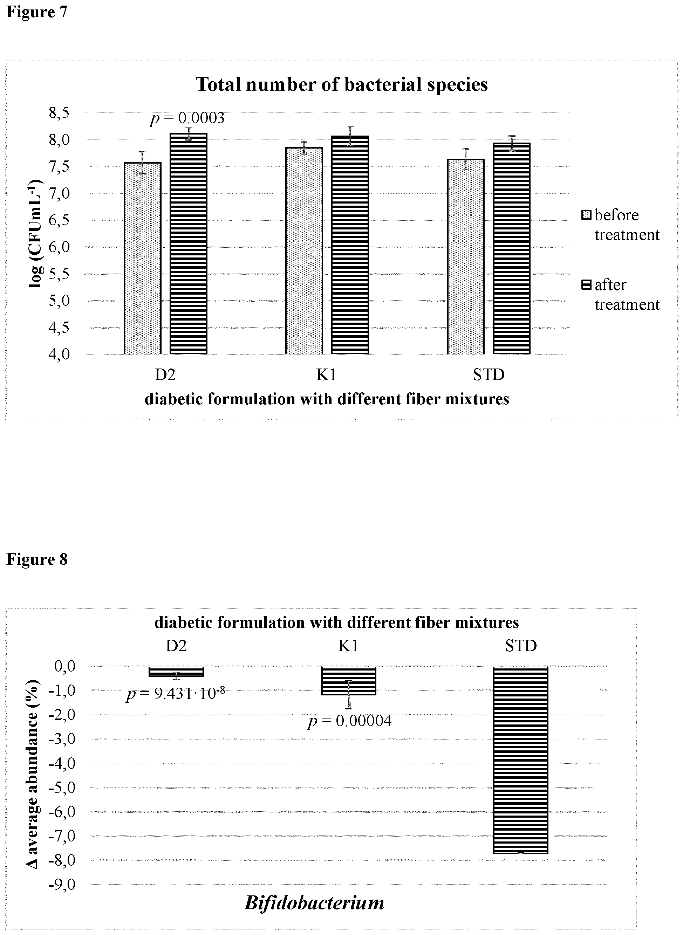

**Figure 7**: Determination of the *in vivo* effect on the total number of bacteria, in mice fed with diabetic formulation containing different fiber mixtures, by determining the number of increased colonies (log (CFUmL⁻¹)) on the nutrient agar. The results show increased bacteria on the on the nutrient agar before and after feeding with diabetic formulation containing different fiber mixtures K1 and D2. Standard food - fed mice (STD) are a control sample.
   The results in Figures 8 to 11 show Metagenomics analysis results.
**Figure 8****:** The influence of diabetic formulations containing D2 and K1 and standard mice diet (STD) on the average relative abundance (%) of bacteria of the genus *Bifidobacterium* in the feces of mice (3 parallels) with induced diabetes after 5 days of feeding, compared to the average relative abundance before feeding, with expressed statistically significant difference (p < 0.05) of each diabetic formulations of the genus *Bifidobacterium* compared to mice fed with standard diet. Results are expressed as the difference in average relative abundance before and after feeding (Δ, %). A statistically significant decrease (*p* < 0.05) in the average relative abundance (%) of the genus *Bifodobacterium* was found after feeding with standard mice diet, compared to examined diabetic formulations where the maintenance of the genus *Bifidobacterium* levels was established. Also, the average relative abundance of the genus *Bifidobacterium* was maintained in the microbiota before and after feeding with diabetic formulations containing D2 and K1, whereas their average relative abundance decreased significantly after feeding with standard mice diet (STD).

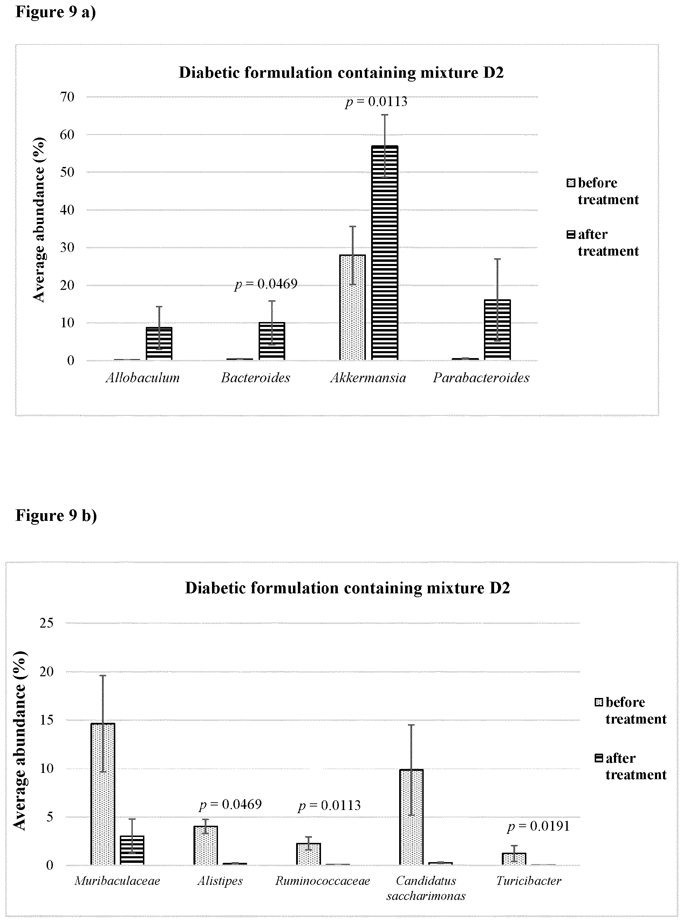

**Figure 9 a)** **and b):** The influence of the innovative diabetic formulation containing D2 on the average relative abundance (%) of bacterial genera attributed to a potentially positive effect **(a)** and potentially negative effect **(b),** in the feces of mice (3 parallels) with induced diabetes after 5 days of feeding compared to their average relative abundance (%) before feeding, with expressed statistically significant difference (*p* < 0.05).The innovative diabetic formulation containing fiber composition with the addition of resveratrol and grape seed extract (D2) showed a statistically significant positive effect in increasing the average relative abundances of the genera *Bacteroides* and *Akkermansia,* considered potentially desirable participants of the intestinal microbiota. It also showed a statistically significant effect on the reduction of the average relative abundances of the bacterial genera *Muribaculceae, Alistipes, Ruminococcaceae* and *Candidatus saccharimonas,* considered potentially undesirable participants of the intestinal microbiota.

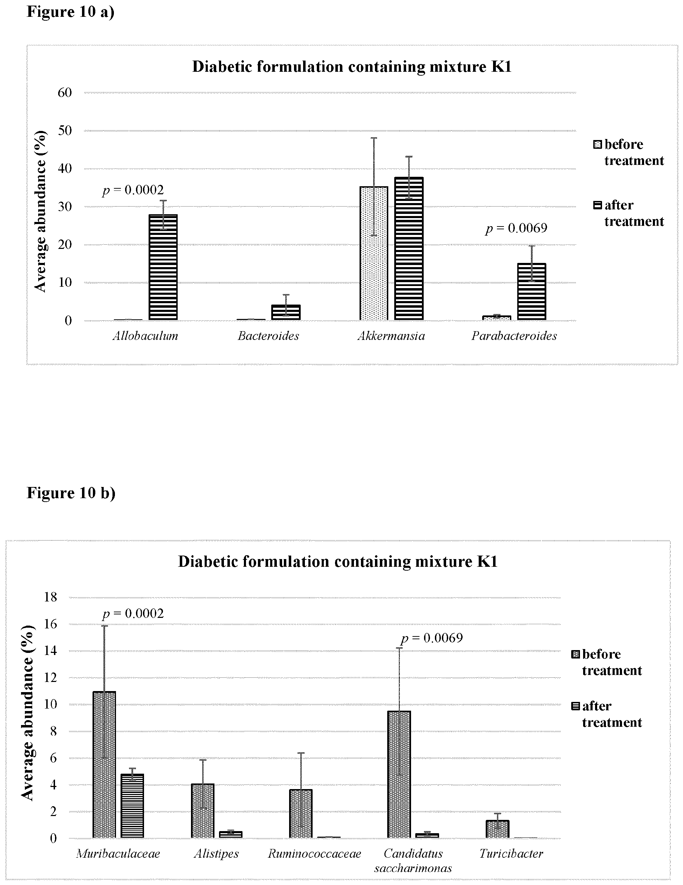

**Figure 10 a)** **and b):** The influence of the innovative diabetic formulation containing K1 on the average relative abundance (%) of bacterial genera attributed to a potentially positive effect **(a)** and potentially negative effect **(b),** in the feces of mice (3 parallels) with induced diabetes after 5 days of feeding compared to their average relative abundance (%) before feeding, with expressed statistically significant difference (*p* < 0.05). The innovative diabetic formulation containing K1 showed a statistically significant positive effect in increasing of the average relative abundance of the genera *Allobaculum* and *Parabacteroides,* considered potentially desirable participants of the intestinal microbiota. It also showed a statistically significant effect on the reduction of the average relative abundances of the bacterial genera *Alistipes* and *Candidatus saccharimonas* considered potentially undesirable participants of the intestinal microbiota.

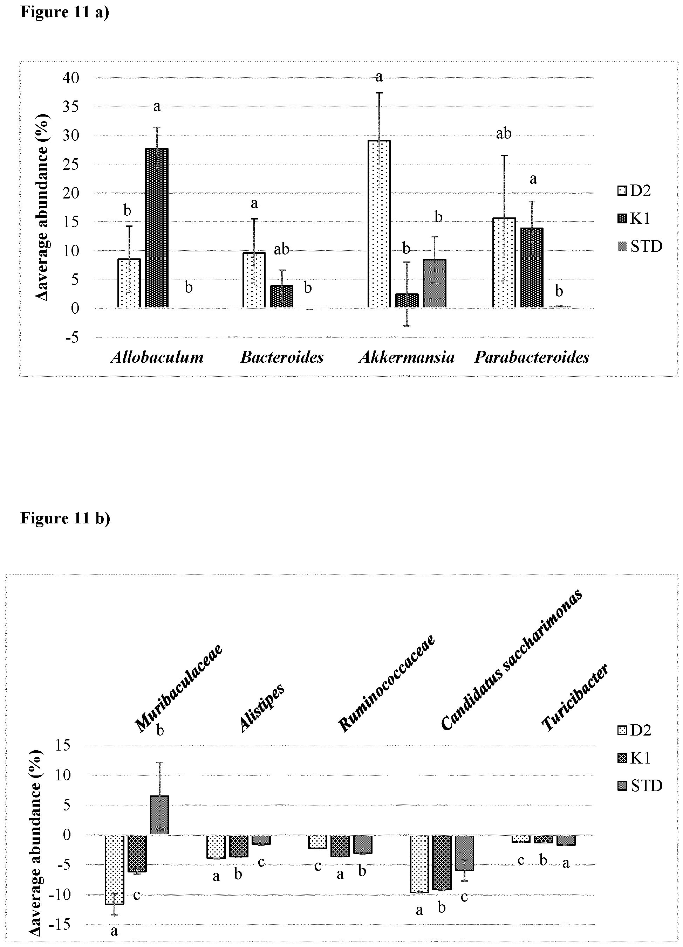

**Figure 11 a)** **and b):** Comparison of the influence of the innovative diabetic formulation containing fiber mixture with the addition of resveratrol and grape seed extract D2, the innovative diabetic formulation containing fiber mixture K1 and standard mice diet (STD) on the average relative abundance of bacterial genera attributed to a potentially positive effect **(a)** and potentially negative effect **(b),** in the feces of mice (3 parallels) with induced diabetes after 5 days of feeding, compared to their average relative abundance before feeding. The results are expressed as the difference in the average relative abundance before and after feeding (Δ, %) of the selected genera. Different letters indicate a statistically significant difference (*p* < 0.05) between the effects on the average relative abundance before and after feeding (Δ, %) of a particular bacterial genus, whereas the same letters indicate that the average relative abundances before and after feeding (Δ, %) are not statistically significant different (*p* < 0.05).

The innovative diabetic formulation containing fiber mixture with the addition of resveratrol and grape seed extract (D2) achieved the best effect in increasing the average relative abundance of the genus *Akkermansia,* considered a desirable participant in the intestinal microbiota, and decreasing of the average relative abundance of the genera *Muribaculaceae, Alistipes* and *Candidatus saccharimonas,* considered undesirable participants in the intestinal microbiota. The innovative diabetic formulation containing fiber mixture K1 had the best effect in increasing the average relative abundance of *Allobaculum* species, as well as the best effect in decreasing the average relative abundance of undesirable *Ruminococcaceae* species.

### DETAILED DESCRIPTION OF THE INVENTION

Resveratrol as used herein relates to the biologically active compound 3,5,4'-trihydroxystilbene present in different plant species such as red wines, grapes, and roots of polygonum cuspidate (*Polygonum cuspidatem*)*.* It is a polyphenol molecule. It includes trans-resveratrol, cis-resveratrol and/or a mixture of them. Resveratrol could also be obtained in synthetic form by chemical synthesis or from microbiological source in a form of trans-resveratrol.

Grape seed extract as used herein relates to the extract obtained by the extraction process from seeds of grape (*Vitis vinifera L.*)*,* contains polyphenols; especially is rich in proanthocyanins.

Resistant dextrin as used herein relates to soluble fiber that is very resistant to digestion. It is partially hydrolysed starch by heating in the presence of food grade-acid.

Oligofructose (fructo-oligosaccharide, FOS) as used herein relates to a food ingredient consisting mainly of oligofructose. It is usually produced by partial enzymatic hydrolysis of inulin or by enzymatic reactions from sucrose. It consists of oligosaccharides composed of fructose linked together by β-(2,1) bonds, and part of fructose chains are terminated by a glucose unit. The degree of polymerization ranges mainly between 2 and 8. It has good water solubility and good fermentability properties, and prebiotic effect.

Inulin as used herein relates to fructose polymer consisting of oligo- and polysaccharides composed of fructose units linked by β-(2,1) bonds. Usually, the fructose chain is terminated by glucose unit. The total number of fructose and glucose unit of inulin ranges mainly between 2 and 60, but possible up to 200 glucose unit. Inulin is found naturally in plants such as chicory, onions and artichokes. It has good water solubility and good fermentability properties, and prebiotic effect.

Acacia fiber (gum arabic) as used herein, relates to a complex polysaccharide obtained from an exudation of Acacia trees (Acacia Senegal or closely related species of *Acacia).* It is dried gummy exudation of high molecular polysaccharides. Gum arabic consists mainly of high molecular weight polysaccharides and their calcium, magnesium and potassium salts, which after hydrolyses yield arabinose, galactose, rhamnose and glucuronic acid. It has good water solubility properties, and can effect viscosity and have gelling properties.

Citrus fiber as used herein, relates to fiber derived from citrus fruit, and consists of an insoluble and soluble fiber fraction.

"Fiber mixture", and "fiber composition" are used as synonims in this application.

Compositions K0, K1, K2 and K3 relate to the fiber compositions as shown in tables 3.1 - 3.4.

Compositions D1, D2, D3 and D4 relate to the innovative fiber compositions with addition of resveratrol and grape seed extract, as shown in tables 3.1 - 3.4.

Diabetic formulations relate to the formulations containing fiber mixtures and the other components as shown in Table 4.

Formulations belong to the category of food for special medical purposes. According to the purpose, characteristics and composition they are diabetic enteral formulation, but also possible to used them for example for malnutrition in general, disease-related malnutrition or in case of risk of malnutrition.

Compositions of the present invention are prepared by method know in the art such as mixing ingredients to get homogenous powder formulation.

"Formulation", "enteral nutrition formulation", "nutrition formulation" are used as synonims in this application.

The innovative fiber composition according to the present invention relates to the fiber composition comprising resveratrol and grape seed extract. Fiber compositions contain both soluble and insoluble fibers.

In one embodiment the invention relates to the enteral nutritional composition comprising:
a) at least two dietary fibers selected from resistant dextrin, oligofructose, inulin, acacia fiber and citrus fiber;
b) antioxidant selected from resveratrol and grape seed extract.

In a further embodiment the invention relates to the enteral nutritional composition comprising:
a) at least three dietary fibers selected from resistant dextrin, oligofructose, inulin, acacia fiber and citrus fiber;
b) antioxidant selected from resveratrol and grape seed extract.

In yet a further embodiment, the invention relates to the enteral nutritional composition comprising:
a) at least four dietary fibers selected from resistant dextrin, oligofructose, inulin, acacia fiber and citrus fiber;
b) antioxidant selected from resveratrol and grape seed extract.

In a yet further embodiment, the invention relates to enteral nutritional composition comprising:
a) all fibers selected from resistant dextrin, oligofructose, inulin, acacia fiber and citrus fiber;
b) antioxidants resveratrol and grape seed extract.

In one embodiment the fiber fraction is in the amount of 0.5 to 40 g of dietary fibers per daily dosage of the enteral nutritional composition, wherein dietary fibers relate to the total content of the pure dietary fibers in the nutritional composition.

In one embodiment the nutritional composition comprises resistant dextrin in an amount of 20-90% by weight, oligofructose in the amount of 10-55% by weight, inulin in the amount of 0.1-30% by weight, acacia fiber in an amount of 1-25% by weight, and citrus fiber in the amount of 1-35% by weight in the fiber fraction, with regard to the content of the pure dietary fiber.

In one embodiment resistant dextrin is in the amount of 30-85% by weight, oligofructose is in the amount of 10-45% by weight, inulin is in the amount of 0. 1-25% by weight, acacia fiber is in the amount of 1-20% by weight, and citrus fiber is in the amount of 1-25 % by weight in the fiber fraction, with regard to the content of the pure dietary fiber.

In one embodiment, the nutritional composition comprises resistant dextrin in an amount of 20-50% by weight, oligofructose in the amount of 10-35% by weight, inulin in the amount of 5-30% by weight, acacia fiber in the amount of 5-20% by weight, and citrus fiber in the amount of 10-35% by weight in the fiber fraction, with regard to the content of the pure dietary fiber.

In one embodiment resistant dextrin is in the amount of 30-40% by weight, oligofructose is in the amount of 15-30% by weight, inulin is in the amount of 5-25% by weight, acacia fiber is in the amount of 5-10% by weight, and citrus fiber is in the amount of 15-25% by weight in the fiber fraction, with regard to the content of pure dietary fiber.

In one embodiment nutritional composition comprises resistant dextrin in the amount of 40-90% by weight, oligofructose in the amount of 10-55% by weight, inulin in the amount of 0-20% by weight, acacia fiber in amount of 1-20% by weight, and citrus fiber in the amount of 1-20% by weight in the fiber fraction, with regard to content of the pure dietary fiber.

In one embodiment resistant dextrin is in the amount of 45-85% by weight, oligofructose is in the amount of 15-45% by weight, inulin is in the amount of 0. 1-10% by weight, acacia fiber is in the amount of 1-10% by weight, and citrus fiber is in the amount of 1-10 % by weight in the fiber fraction, with regard to content of the pure dietary fiber.

In one embodiment resveratrol is in the amount of 8-3000 mg per daily dosage of the enteral composition. In another embodiment resveratrol is in the amount of 50-450 mg per daily dosage of the enteral composition.

In one embodiment Grape seed extract is in the amount of 50-2000 mg per daily dosage of the enteral composition. In another embodiment Grape seed extract is in the amount of 100-600 mg per daily dosage of the enteral composition.

In one embodiment amount of resveratrol relates to a total content of resveratrol raw material. In another embodiment it relates to pure resveratrol (calculated based on percentage of resveratrol in raw material).

In one embodiment amount of grape seed extract relates to total content of grape seed extract. In another embodiment it relates to total polyphenols or total proanthocyanins from grape seed extract.

In one embodiment, the nutritional composition comprises resveratrol in the amount of 0.02 % by weight to 7.5% by weight in the innovative fiber composition containing resveratrol and grape seed extract.

In one embodiment the nutritional composition comprises resveratrol in the amount of 0.1 to 3% by weight in the innovative fiber composition containing resveratrol and grape seed extract.

In one embodiment, the nutritional composition comprises grape seed extract in the amount 0.1% by weight to 12% by weight in the mixture of fiber containing resveratrol and grape seed extract.

In one embodiment, the nutritional composition comprises fiber fraction, resveratrol, grape seed extract, a protein fraction, a fat fraction, and carbohydrate fraction.

In one embodiment, the protein fraction comprises high quality protein raw materials like proteins from milk (for example casein protein, whey protein) or other animal sources or plant proteins or combinations thereof.

In one embodiment, fat fractions comprise sources of lipids suitable for enteral nutritional composition. In further embodiment fat fraction comprises plant or animal fat sources of unsaturated and saturated fat acids. Some examples of fat sources: sunflower oil, rapeseed oil, medium-chain triglycerides, fish oil.

In one embodiment, the carbohydrate fraction comprises carbohydrates suitable for enteral nutritional composition.

In one embodiment, the carbohydrate fraction comprises complex and simple type of carbohydrates. Some examples of carbohydrates: maltodextrin, modified starch, fructose.

In one embodiment, the energy distribution from fat fraction is 15-50% from carbohydrates 20-60%, from proteins 10-60%, and from fiber 0.2-6% of total energy value of nutritional composition.

In one embodiment, the composition relates to the liquid (ready to drink) form.

In one embodiment, the composition relates to powder form wherein powder form need to be reconstituted with the addition of liquid according to the instructions for use.

In a further embodiment, the composition relates to semi-solid form, for example pudding; or solid form, for example nutritional bars.

Enteral composition according to the present invention is intended for: persons with diabetes, GI disorders, persons suffering from general or disease-related malnutrition or are in of risk of malnutrition, persons suffering from sarcopenia and age related nutrition consequences.

### EXAMPLES

### 1.1 Nutrient media for the growth of microorganisms used for analysis of lactogenic and bifidogenic effect in vitro

**a)** MRS - the nutrient medium for determining the number of lactobacilli (as shown in Table 1) has been modified to determine the lactogenic effect so that it contains all ingredients except glucose. Instead of glucose, fiber mixtures were added. MRS agar contains all the ingredients listed in Table 1, with the addition of agar (Biolife, Italy) at a concentration of 15 g L⁻¹.

**Table 1. Composition of MRS (Man-Rogosa-Sharpe) broth**

| **Ingredient** | **y (g L⁻¹)** | **Source** |
|---|---|---|
| K₂HPO₄ (potassium hydrogen phosphate) | 2 | Acros Organics, Belgium |
| CH₃COONa (sodium acetate anhydrous) | 5 | Gram-mol, Croatia |
| MgSO₄ (magnesium sulfate) | 0.2 | Acros Organics, Belgium |
| MnSO₄ · H₂O (manganese sulfate) | 0.05 | Merck, Germany |
| HOC(CO₂H)(CH₂CO₂NH₄)₂ (Ammonium citrate) | 2 | Acros Organics, Belgium |
| glucose | 20 | Kemika, Croatia |
| pepton | 10 | Biolife, Italy |
| meat extract | 10 | Biolife, Italy |
| Yeast Extract | 5 | Difco Laboratories, USA |
| Tween 80^{®} | 1 | Merck, Germany |

b) TOS agar - the nutrient medium for determining the number of bifidobacteria (as shown in Table 2) has been modified to determine the bifidogenic effect so that it contains all ingredients except galaktooligosaccharides. Instead of galaktooligosaccharides, fiber mixtures were added.

**Table 2. Composition of TOS medium**

| **Ingredient** | **γ (g L⁻¹)** | **Source** |
|---|---|---|
| agar | 15 | Biolife, Italy |
| ammonium sulfate | 3 | Gram-mol, Croatia |
| MgSO₄ · 7H₂0 (magnesium sulfate heptahydrate) | 0.2 | Gram-mol, Croatia |
| enzymatic hydrolysate casein (pepton) | 10 | Biolife, Italy |
| K₂HPO₄ (potassium hydrogen phosphate) | 4,8 | Kemika, Croatia |
| L-cysteine | 0.5 | Sigma Aldrich, USA |
| KH₂PO₄ (potassium dihydrogen phosphate) | 3 | Kemika, Croatia |
| Yeast Extract | 1 | Difco Laboratories, SAD |
| sodium propionate | 15 | Acros Organics, Belgium |
| galaktooligosaccharide | 10 | Biosynth, Switzerland |

### 1.2 Nutrient media for the growth of microorganisms used for analysis of lactogenic effect in vivo

a) nutrient medium for the maintenance and cultivation of lactic acid bacteria of the genus *Lactobacillus* is shown Table 1.
b) Nutrient medium for the maintenance and cultivation of lactic acid bacteria of the genus *Lactococcus:* M17 agar composition (g L⁻¹ distilled water) (Biolife, Italy): casein hydrolysate trypsin hydrolysate 2.5; pepton 2.5; soy pepton 5.0; yeast extract 2.5; meat extract 5.0; lactose 5.0; sodium glycerophosphate 19.0; magnesium sulfate 0.25; ascorbic acid 0.5. pH value of the medium is 7.1, and sterilization is carried out at 115°C for 15 min.

### 1.3. Nutrient media for cultivation and selective growth of pathogens

a) Nutrient medium for selective growth of *Staphylococcus*
   BP (eng. Baird-Parker) agar composition (g L⁻¹ distilled water) (Biolife, Italy): casein peptone 10; beef extract 5; yeast extract 1; sodium pyruvate 10; lithium chloride 5; glycine 12; agar 17. pH of the medium is 7.2, and sterilization is carried out at 121°C for 15 minutes. After cooling, a 5% emulsion of tellurite and egg yolk is sterilely added to the prepared medium.
b) Selective nutrient medium for isolation of *Listeria monocytogenes*
   Aloe Listeria agar composition (g L⁻¹ distilled water) (Biolife, Italy): meat peptone 18; tripton 6; yeast extract 10; sodium pyruvate 2; glucose 2; magnesium glycerophosphate 1; MgSO4 0.5; NaCl 5; LiCl 10; Na₂HPO₄ 2.5; 5-bromo-4-chloro-3-indolyl-D-glucopyranoside 0.05; agar 13. pH of the medium is 7,2, and sterilization is carried out at 121°C for 15 minutes. After cooling, an Aloe selective additive and one vial of a liquid additive were sterilely added to the prepared medium.

### 1.4. Nutrient medium for determining the total number of bacteria

Nutrient agar composition (g L⁻¹ of distilled water) (Biolab, Hungary): peptoni 11; NaCl 5. pH value of the medium is 7.4, and sterilization is carried out at 121°C for 15 min.

### 2.1. In vitro determination of lactogenic and bifidogenic effect using selective nutrient media on experimental animal feces samples

### 2.1.1. Preparation of nutrient media for lactogenic and bifidogenic effects analysis

The determination of lactogenic and bifidogenic effect was carried out according to Karlson et al. Prebiotic Effects and Fermentation Kinetics of Wheat Dextrin and Partially Hydrolyzed Guar Gum in an In Vitro Batch Fermentation System. Foods, 2015, 4(3), 349-358., with modifications.

Fiber mixtures were prepared by the method know in the art such as mixing ingredient, in order to get homogenous mixture. There were prepared 3 flasks per 200 mL of MRS agar without glucose (2 for individual fiber mixtures, 1 for control), one flask of 200 mL MRS agar with the addition of glucose, one flask of 100 mL MRS broth without the addition of glucose, and 3 tubes with 5 mL MRS broth with the addition of glucose, according to the data listed in Table 1. The media were then sterilized by autoclave at 121 °C for 15 min. In MRS agar without glucose, after sterilization, while the medium is still hot, 4 g of one of the tested fiber mixtures were added to individual flask (instead of glucose). After the media were mixed on a magnetic mixer, the contents were poured into Petri dishes which, after the media cooled, were stored in the refrigerator at 4 °C.

MRS broth without glucose, 5 mL each, was arranged in sterile tubes (9 tubes in total - 3 parallels × 2 fiber mixtures + 3 parallels × MRS without glucose), and individual fiber mixtures were added subsequently (0.1 g of each mixture into one tube), just before the plating of the media prepared with a suspension of feces of mice.

Also, 3 flasks of 200 mL of TOS agar without galaktooligosaccharides were prepared (2 for individual fiber mixtures, 1 for control) and one flask of 200 mL of TOS agar with the addition of galactooligosaccharides, according to the data listed in Table 2. The media were then sterilized by autoclaving at 121 °C for 15 minutes. After sterilization, while the medium is still hot, 2 g of one of the tested fiber mixtures was added to the TOS (instead of galactooligosaccharides). After the media were mixed on the magnetic mixer, the contents were poured into Petri dishes, which, after the media cooled, were stored in the refrigerator at 4 °C.

### 2.1.2 Preparation of suspension of feces of mice

Faecal samples were collected from 3-month-old black C57 experimental mice. The experiment comprised a total of 18 mice, 9 females (lat. femininum, f) and 9 males (lat. masculinum, m). The mice were divided into 3 groups of 6 mice each (3 male and 3 female). The mice in each group were housed in the same cage. After 3 months, diabetes was induced in the mice by injection of 200 mg streptozotocin per kilogramme of mouse, dissolved in a citrate buffer. To confirm diabetes, the mice's glucose levels were measured, after which they were given 10% sucrose instead of water for two days. As the mice began to die, they were administered insulin, after which they were transferred from conventional cages to metabolic cages for 24 hours, in which the mice's faeces were collected for the in vitro experiment, as described in 2.1.1.

The mouse faeces samples were collected in containers coated with Styrofoam, the temperature of which was kept at -20 °C. The collected mouse faeces samples (5 grams) were mixed with 10 mL of sterile saline, after which homogenization was carried out in Stomacher bags in a homogenizer, twice for 180 s each. Dense, homogeneous mixtures are prepared. From the prepared suspensions of feces, resuspedied in saline, 10 µL was plated each in two parallels from 10⁻¹ to 10⁻⁵ dilution to MRS plates with glucose and TOS plates with galactooligosaccharide - in three parallels for the initial bacterial cell number determination, lactobacilli and bifidobacteria, respectively. The plates were incubated anaerobically at 37 °C, for 48 hours (MRS agar), or for 72 hours (TOS agar).

### 2.1.3. Inoculation of prepared nutrient media by suspension of feces

In 5 mL MRS broth, to which 0.1 g of fiber mixture was added, 500 µL of feces suspension was grafted in three parallels (2 fiber mixtures × 3 parallels = 6 tubes). In addition to MRS broth with the addition of fiber mixture, 500 µL of feces suspension was inoculated into MRS broth with the addition of glucose (3 parallels or 3 tubes) and in MRS broth without glucose (3 parallels or 3 tubes) as positive and negative controls. The tubes were placed on anaerobic incubation for 24 hours at 37 °C.

### 2.1.4. Determination of the number of live bacteria by indirect method

Determination of the number of live bacteria was carried out by indirect method according to Leboš Pavunc et al.: Characterization and application of autochthonous starter cultures for fresh cheese production. Food Technol. Biotechnol. 2012, 50, 141-151 and Leboš Pavunc et al.: Influence of dehydrated wheat/rice cereal matrices on probiotic activity of Bifidobacterium animalis ssp. lactis BB-12®. Food Technol. Biotechnol. 2019, 57(2), 147-158 with modifications.

After incubation, in the test tubes a sediment of cells and ingredients of suspension of feces were visible. Decimal dilutions were prepared for each of the 6 tubes with a mixture of fibers, which were grafted at 10 µL in two parallels from 10⁻¹ to 10⁻⁶ dilutions to the appropriate MRS and TOS agar, prepared according to the procedure described in chapter 1.1.

In addition to the MRS and TOS agar plates with the addition of fiber mixtures K1 and D2, from MRS broth with and without the addition of glucose grafted with 500 µL suspension of feces, 10 µL was grafted in two parallels from 10⁻¹ to 10⁻⁶ dilution to MRS agar plates with and without the addition of glucose. Also, in the same way it is grafted onto TOS agar plates with and without the addition of galaktooligosaccharides

Petri dishes were then placed on anaerobic incubation at 37 °C, for 48 hours for MRS agar, and during 72 hours for TOS agar.

### 2.2. In vivo determination of positive effects on the microbiota of experimental mouse models

### 2.2.1. Causing diabetes and feeding mice

For the analysis of the composition of the intestinal microbiome, *in vivo* experiments were conducted on a 3-month-old model of experimental C57 black mice. The experiment involved a total of 18 mice, 9 female (lat. femininum, f) and 9 male (lat. masculinum, m). Mice were divided into 3 groups, 6 mice in each group (3 male and 3 female).The mice divided by groups were in the same cage and fed diabetic formulations with different fiber mixtures, the composition of which are listed in Table 3.2 (K1, D2). A mice fed only standard food (STD), the composition of which is shown in Table 5, were used as a control. Before intervention with appropriate dibetic formulations with different fiber mixtures, mice were fed ad libitum standard food daily, after separation from their mother in the third week of life.

After 3 months, diabetes was induced in the mice by injecting 200 mg streptozotocin per kilogramme of mouse, dissolved in a citrate buffer. To confirm diabetes, the mice's glucose levels were measured, after which they were given 10% sucrose instead of water for two days. As the mice began to die, they were administered insulin, after which they were transferred from conventional cages to metabolic cages for 24 hours.

After collecting feces samples of mice fed standard food, the mice were returned to conventional cages where they were fed diabetic formulations with 2 different mixtures (table 4) in groups for 5 days. Upon completion of feeding, the mice were returned to metabolic cages for 24 hours to collect faecal samples at the end of feeding.

### 2.2.2. Microbiological analyses of target bacterial populations of intestinal microbiota

In order to determine the lactogenic effect, the MRS nutrient medium was used to determine the number of increased bacterial colonies of *Lactobacillus* species.

Furthermore, in order to determine the influence of fiber mixtures on lactic acid bacteria of the genus *Lactococcus,* an M17 nutrient medium was used. To determine the influence of fiber mixture on potentially pathogenic microorganisms, the following nutrient media were used: Aloa for determining the number of bacterial colonies of *Listeria monocytogenes* and Baird Parker for *Staphylococcus aureus.* The total number of bacterial species present in the feces of mice before and after feeding with fiber mixtures, is determined on nutrient agar.

100 mg of each sample was weighed in a microtest tube for microanalysis on the aforementioned selective nutrient media for bacterial growth. Decimal dilutions in saline were prepared so that 900 µL of sterile saline was added to the scale of the feces sample (100 mg). After vortexing from the first dilution (100 mg feces and 900 µL of saline), 100 µL of suspension was pipetted in the next 900 µL sterile saline for the preparation of the second dilution and so on to the eighth dilution for all 4 samples (2 samples before and 2 samples after feeding with fiber mixtures). On the marked Petri dishes with a certain selective nutrient medium, 10 µL suspensions were grafted in two parallels. The nutrient media thus inoculated were placed on incubation at 37 C in the thermostat, except for the M17 medium which was incubated at 30 C. Anaerobic conditions are provided for TOS and MRS, and aerobic for all other selective nutrient media. After 2 days of incubation of nutrient media, the increased bacterial populations were counted and expressed as CFUmL⁻¹, except for the TOS nutrient medium, which was incubated for 72 hours.

### 2.2.3.2 Illumina MiSeq sequencing

Pair-end sequencing of the V3-V4 variable region of 16S rRNA was performed on an Illumina MiSeq platform according to the manufacturer's instructions. The sequence of the raw data was processed using the analysis system MR DNA. Sequences with fewer than 150 base pairs and sequences with ambiguous bases were removed during sequence alignment. Sequences were then qualitatively filtered and dereplicated with a maximum error of 1.0. Dereplicated or unambiguous sequences were de-noised, eliminating sequences with sequencing errors or errors that occurred during PCR. Chimers were then removed, i.e., two or more biological sequences that were misjoined, resulting in a denoised sequence or zOTU. The final zOTU sequences were taxonomically classified using the BLASTn program by alignment with the database available at NCBI (www.ncbi.nlm.nih.gov).

### 2.3. Statistical analysis

The experiments were repeated three times and the results were presented as the mean of three independent samples ± standard deviation (SD). Statistically significant differences in samples were determined by one-way analysis of variance (one-way ANOVA), using the Statistics Kingdom computer program (https://www.statskingdom.com/). The statistical difference between the samples was considered significant if the p values were less than 0.05.

**Tables 3.1 to 3.4.** show fiber compositions K0, K1, K2 or K3 and fiber compositions D1, D2, D3 and D4 containing resveratrol and grape seed extract

**Table 3.1 (Example 1)**

| **INGREDIENTS- raw material weight %** | **K0** | **D1** |
|---|---|---|
| Resistant dextrin | 39.6 | 38.9 |
| Oligofructose (FOS) | 24.2 | 23.8 |
| Inulin | 8.8 | 8.6 |
| Acacia fiber (gum arabic) | 7.0 | 6.9 |
| Citrus fiber | 20.4 | 20.1 |
| Resveratrol | - | 0.5 |
| Grape seed extract | - | 1.2 |
| **TOTAL** | **100** | **100** |

**Table 3.2 (Example 2)**

| **INGREDIENTS - raw material / weight %** | **K1** | **D2** |
|---|---|---|
| Resistant dextrin | 35.0 | 33.8 |
| Oligofructose (FOS) | 16.4 | 15.8 |
| Inulin | 18.7 | 18.0 |
| Acacia fiber (gum arabic) | 9.3 | 9.0 |
| Citrus fiber | 20.6 | 19.8 |
| Resveratrol | - | 1 |
| Grape seed extract | - | 2.5 |
| **TOTAL** | **100** | **100** |

**Table 3.3 (Example 3)**

| **INGREDIENTS - raw material / weight %** | **K2** | **D3** |
|---|---|---|
| Resistant dextrin | 81.1 | 79.9 |
| Oligofructose (FOS) | 14.9 | 14.6 |
| Inulin | 0.1 | 0.1 |
| Acacia fiber (gum arabic) | 1.0 | 1.0 |
| Citrus fiber | 2.9 | 2.9 |
| Resveratrol | - | 0.4 |
| Grape seed extract | - | 1.1 |
| **TOTAL** | **100** | **100** |

**Table 3.4 (Example 4)**

| **INGREDIENTS raw material / weight %** | **K3** | **D4** |
|---|---|---|
| Resistant dextrin | 55.4 | 54.0 |
| Oligofructose (FOS) | 31.9 | 31.2 |
| Inulin | 4.3 | 4.2 |
| Acacia fiber (gum arabic) | 2.1 | 2.1 |
| Citrus fiber | 6.3 | 6.1 |
| Resveratrol | - | 0.7 |
| Grape seed extract | - | 1.7 |
| **TOTAL** | **100** | **100** |

**Table 4. a) and b) Compositon of diabetic formulation with fiber mixture (K0, K1, K2 or K3) and with fiber mixture containing resveratrol and grape seed extract (D1, D2, D3 or D4).**

| a) Composition of diabetic formulation containing fiber mixtures expressed as mass percentage per groups of used raw materials | | |
|---|---|---|
| | **% by weight** | |
| Protein raw materials | 20-30% | 20-30% |
| Carbohydrates raw materials | 30-45% | 30-45% |
| Fat raw materials | 20-32% | 20-32% |
| Minerals and vitamins raw materials | 2-8% | 2-8% |
| Aditives, flavours and other raw materials | 1-7% | 1-7% |
| Fibermixtures **K0, K1, K2 or K3** | 3-10% | |
| Fibermixtures with added resveratrol | | 4-11% |
| and grape seed extract **D1, D2, D3 or D4** | | |

| b) Composition of diabetic formulation containing fiber mixtures expressed on energy distribution of nutrients | | |
|---|---|---|
| | **% energy** | |
| Proteins | 15-30% | |
| Carbohydrates | 25-50% | |
| Fat | 25-50% | |
| Fibers mixtures **K0, K1, K2, K3, D1, D2, D3 or D4** | 1-5% | |

**Table 5. The composition of standard mouse food**

| **Additives (per kg)** | | |
|---|---|---|
| 3a672a | Vitamin A | 14400 I.U. |
| 3a671 | Vitamin D3 | 1260 I.U. |
| 3b103 | Iron (Fe) | 180 mg |
| 3b503 | Mangan (Mn) | 54 mg |
| 3b605 | Zinc (Zn) | 67.5 mg |
| E4 | Copper (Cu) | 11.7 mg |
| 3b202 | Iodine (I) | 0.9 mg |
| E562 | Sepiolite | 880 mg |

**Ingredients:** wheat, corn, toasted extracted soybean meal, corn gluten, wheat straw, fish meal, alfalfa flour, dicalcium phosphate, calcium carbonate, sodium chloride, whey powder, soybean oil, yeasts

## Claims

1. An enteral nutritional composition comprising:
a) at least two dietary fibers selected from resistant dextrin, oligofructose, inulin, acacia fiber and citrus fiber;
b) antioxidant selected from resveratrol and grape seed extract.

2. The composition according to claim 1, comprising at least three dietary fibers selected from resistant dextrin, oligofructose, inulin, acacia fiber and citrus fiber.

3. The composition according to claim 1, comprising at least four dietary fibers selected from resistant dextrin, oligofructose, inulin, acacia fiber and citrus fiber.

4. The composition according to any of preceding claims, wherein resistant dextrin is in the amount of 20-90% by weight, oligofructose is in the amount of 10-55% by weight, inulin is in the amount of 0.1-30% by weight, acacia fiber is in the amount of 1-25% by weight, and citrus fiber is in the amount of 1-35% by weight in the fiber fraction.

5. The composition according to any of preceding claims, wherein resistant dextrin is in amount of 20-50% by weight, oligofructose is in the amount of 10-35% by weight, inulin is in the amount of 5-30% by weight, acacia fiber is in the amount of 5-20% by weight, and citrus fiber is in the amount of 10-35% by weight in the fiber fraction.

6. The composition according to any of preceding claims, wherein resveratrol is in the amount 0.02% by weight to 7.5% by weight in the mixture of fiber comprising resveratrol and grape seed extract.

7. The composition according to any of preceding claims, wherein grape seed extract is in the amount 0.1% by weight to 12% by weight in the mixture of fiber comprising resveratrol and grape seed extract.

8. The composition according to any of preceding claims, wherein resveratrol is in the amount of 8-3000 mg and grape seed extract is in the amount of 50-2000 mg per daily dosage of enteral nutritional composition.

9. The composition according to any of preceding claims, wherein fiber fraction is in the amount of 0.5 to 40 g of dietary fibers per daily dosage of enteral nutritional composition.

10. The composition according to any of preceding claims, further comprising a protein fraction, a fat fraction, and a carbohydrate fraction.

11. The composition according to claim 10, wherein protein fraction comprises proteins from milk or other animal sources or plant proteins or combinations of them; fat fraction comprises plant or animal fat sources of unsaturated and saturated fat acids; carbohydrate fraction comprises complex and simple type of carbohydrates.

12. The composition according to any of preceding claims, wherein energy distribution from fat fraction is 15-50%, from carbohydrates 20-60%, from proteins 10-60%, and from fiber 0.2-6% of total energy value of nutritional composition.

13. The composition according to any of preceding claims wherein the composition is in the liquid form.

14. The composition according to any of preceding claim wherein the composition is in powder form, or in form of semi-solid or solid form.

15. The composition according to any of preceding claims for use in providing nutrition to a persons suffering from disorder selected from diabetes, GI disorders, general or disease-related malnutrition or are in risk of malnutrition, or to a persons suffering from sarcopenia and age-related nutrition consequences.
